# EUROPEAN PATENT APPLICATION

(11) **EP 4 148 523 A1**
(43) Date of publication of application: **15.03.2023**
(21) Application number: 22194100.8
(22) Date of filing: 06.09.2022
(51) Int. Cl.: G05B 23/02

(54) **INTELLIGENT ASSET ANOMALY PREDICTION VIA FEATURE GENERATION**

(30) Priority: 09.09.2021 US 202163242467 P
(71) Applicant: Honeywell International Inc., Charlotte, NC 28202 (US)
(72) Inventor: WU, Yanling, Charlotte, 28202 (US)
(74) Representative: Haseltine Lake Kempner LLP

(57) **Abstract**

Various embodiments described herein relate to intelligently detecting and predicting asset anomalies and faults. Such detection is enabled by generating feature that capture relationships between asset sensor values and different operation conditions or states of assets. In this regard, one or more features based at least on sensor data collected from a plurality of sensors associated with an asset are generated, and a data stream comprising data associated with the asset is received. An anomaly score for the data stream is then determined based at least on the one or more features. In accordance with determining whether the anomaly score is indicative of a potential fault of the asset, fault data indicative of the potential fault is generated, and presentation of the fault data and an indication of the one or more features considered in the determination of the anomaly score via the user interface is caused.

## Description

### TECHNICAL FIELD

The present disclosure relates generally to real-time asset analytics, and more particularly to a multi-tenant cloud solution for deployment and automation of asset analytics, process analytics, and anomaly prediction and detection.

### BACKGROUND

In traditional asset and process monitoring, sensor alarm limits are set with respect to normal operating range values of assets; however, an asset may operate in various operation conditions or states, each having different normal range values. Further, various components, devices, sensors, and signals values thereof of an asset may be interrelated and/or interdependent, and traditionally, such inherent relationships are not considered when setting sensor alarm limits and detecting anomalies. As such, existing methods and systems for detecting anomalies and faults fail to detect a number of asset anomalies due to failure to consider different operation conditions of each asset and relationships between assets.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
FIG. 1 illustrates an exemplary networked computing system environment, in accordance with one or more embodiments described herein;
FIG. 2 illustrates a schematic block diagram of a framework of an IoT platform of the networked computing system, in accordance with one or more embodiments described herein;
FIG. 3 illustrates an example system that provides executes techniques presented herein, in accordance with one or more embodiments described herein;
FIG. 4 illustrates a flow diagram of example operations related to intelligently detecting asset anomalies and faults via generation of one or more features, in accordance with one or more embodiments described herein;
FIG. 5 illustrates a flow diagram of example operations related to configuring and modifying one or more features for the intelligent detection of asset anomalies and faults, in accordance with one or more embodiments described herein;
FIG. 6 illustrates a flow diagram of example operations related to determining anomaly scores for assets using a trained model, in accordance with one or more embodiments described herein;
FIG. 7 illustrates example data relating to the use of a model for the intelligent detection of asset anomalies and faults, in accordance with one or more embodiments described herein;
FIG. 8A and FIG. 8B illustrate example data relating to the use of a model for the intelligent detection of asset anomalies and faults, in accordance with one or more embodiments described herein;
FIG. 9 illustrates a flow diagram of example operations related to configuring and training a model used for the intelligent detection of asset anomalies and faults, in accordance with one or more embodiments described herein; and
FIG. 10 illustrates a flow diagram of example operations related to intelligently detecting asset anomalies and faults via generation of one or more features in an asset-scalable manner, in accordance with one or more embodiments described herein.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments. The term "or" is used herein in both the alternative and conjunctive sense, unless otherwise indicated. The terms "illustrative," "example," and "exemplary" are used to be examples with no indication of quality level. Like numbers refer to like elements throughout.

The phrases "in an embodiment," "in one embodiment," "according to one embodiment," and the like generally mean that the particular feature, structure, or characteristic following the phrase can be included in at least one embodiment of the present disclosure, and can be included in more than one embodiment of the present disclosure (importantly, such phrases do not necessarily refer to the same embodiment).

The word "exemplary" is used herein to mean "serving as an example, instance, or illustration." Any implementation described herein as "exemplary" is not necessarily to be construed as preferred or advantageous over other implementations.

If the specification states a component or feature "can," "may," "could," "should," "would," "preferably," "possibly," "typically," "optionally," "for example," "often," or "might" (or other such language) be included or have a characteristic, that particular component or feature is not required to be included or to have the characteristic. Such component or feature can be optionally included in some embodiments, or it can be excluded.

In general, the present disclosure provides for intelligent detection of asset anomalies and faults via generation of features that account for various different operation conditions of an asset and that capture relationships and interdependencies of a plurality of sensor data associated with an asset. Specifically, different portions of the plurality of sensor data may be collected from different sensors associated with an asset and may be interrelated and/or interdependent among each other. Generated features are then used to configure and/or train various models, and trained models are then used to determine anomaly scores for a data stream received from an asset. In some examples, the disclosed models are machine learning models.

Various example embodiments are advantageously scalable by using features generated from data associated with a first asset to configure, train, and/or use models for determining anomaly scores for a second asset. Thus, such scalability improves efficiency in anomaly detection and prediction, improves accuracy of anomaly detection and prediction, and extends anomaly detection and prediction functionality to multiple assets. In some examples, such scalability improves anomaly detection and prediction in newly added assets, to include assets whose functionality and/or specifications are unknown.

Traditionally, detection of anomalies in assets generally involves simple determinations of whether individual sensor values are outside pre-determined and/or preset sensor limits. As mentioned, such traditional anomaly detection fails to consider that an asset may operate in various operation conditions or states, each having different normal range values. Further, various components, devices, sensors, and signals values thereof of an asset may be interrelated and/or interdependent, and traditionally, such inherent relationships are not considered when setting sensor alarm limits and detecting anomalies. These inherent relationships may be also understood as domain knowledge. To provide technical solutions to these technical problems, various embodiments provide systems, methods, device, computer program products, and/or the like for asset anomaly detection and prediction based at least on configuring and training models using features generated to account for various different operation conditions of an asset and to capture relationships and interdependencies of a plurality of sensor data associated with an asset. In various embodiments, machine learning models are trained using a combination of such features and raw sensor data collected from an asset to determine anomaly scores.

Generation of such features then involves using domain knowledge to identify transformations of raw sensor data to better represent or characterize an asset, such that aberrations and anomalies are better detected. Machine learning models provided with feature data learn and understand a pattern or profile of features and raw sensor data, resulting in more accurate determination of anomaly scores and prediction of anomalies. Accordingly, improved anomaly detection and prediction enables predictive maintenance on assets and corrective action and improves asset and process availability and safety.

Thus, the present disclosure provides a system for intelligent detection/prediction of asset anomalies and faults via generation of one or more features. In various embodiments, the system includes a processor and a memory that stores executable instructions. In various embodiments, the executable instructions, when executed by the processor, cause the processor to generate, via input to a user interface, one or more features based at least on sensor data collected from a plurality of sensors associated with an asset. As previously discussed, the one or more features are configured to account for different operation conditions of the asset and to capture relationships and interdependencies within the sensor data and portions thereof, which enables improved accuracy in detecting and predicting asset anomalies and faults. For example, in some embodiments, the one or more features include an average sensor value (e.g., temperature) from the plurality of sensors associated with the asset at an instance and/or over a time period, as well as a plurality of deltas from the average sensor value each corresponding to a sensor. In various embodiments, the executable instructions, when executed by the processor, cause the processor to further receive a data stream comprising data associated with the asset and to determine an anomaly score for the data stream based at least on the one or more features. Specifically, the anomaly score is determined by processing the data stream in accordance with a trained model that is trained based at least on a combination of historical data associated with the asset and the one or more features. In various embodiments, the trained model comprises one of an advanced pattern recognition model, a moving-mean principal component analysis (MMPCA) model, or an autoencoder model.

In various embodiments, the executable instructions, when executed by the processor, cause the processor to further, in accordance with a determination that the anomaly score is indicative of a potential fault of the asset, generate fault data indicative of the potential fault and cause presentation of the fault data and an indication of the one or more features considered in the determination of the anomaly score via the user interface. Presentation of the indication of the one or more features enables one to reach a contextual understanding of how and why a potential fault was identified. Further, presentation of the indication of the one or more features enables identification of at least one specific component or sensor of the asset that may be causing or associated with the potential fault.

Functionality of the provided system is advantageously extended with efficiency and accuracy to additional assets. Particularly, in various embodiments, the executable instructions, when executed by the processor, further cause the processor of the system to receive a second data stream associated with a second asset and to determine a second anomaly score for the second data stream based at least on the one or more features generated based at least on the sensor data collected from the plurality of sensors associated with the asset. That is, the asset is a first asset, and the one or more features generated from the plurality of sensors associated with the first asset are used to determine an anomaly score for the data stream associated with the second asset. Similarly, the second anomaly score is determined by processing the second data stream in accordance with a trained model, such as the trained model used in determining a first anomaly score for the first data stream associated with the first asset. In various embodiments, the second anomaly score is determined by processing the second data stream in accordance with a trained model trained based at least on a combination of historical data associated with the second asset and the one or more features.

In various embodiments, the executable instructions, when executed by the processor, further cause the processor to, in accordance with a determination that the second anomaly score is indicative of a potential fault of the second asset, generate fault data indicative of the potential fault of the second asset and cause presentation of the fault data and an indication of the one or more features considered in the determination of the second anomaly score via the user interface. Again, various embodiments provide scalability, as the one or more features considered in the determination of the second anomaly score associated with the second asset are generated based at least on sensor data collected from the first asset.

Various embodiments additionally enable dynamic improvements to efficiency and accuracy through reconfiguring and retraining the trained model. In various embodiments, the executable instructions, when executed by the processor, cause the processor to evaluate prediction accuracy of the trained model. For example, prediction accuracy is evaluated based at least on providing a testing data set to the trained model. In various embodiments, the executable instructions, when executed by the processor, cause the processor to further, in accordance with a determination that a prediction accuracy requirement for the trained model is satisfied, cause presentation of an indication of the determination that the prediction accuracy requirement for the trained model is satisfied via the user interface. Further in accordance with the determination that the prediction accuracy requirement for the trained model is satisfied, a modification of at least one feature of the one or more features is received via the user interface in response to the presentation, and the trained model is reconfigured and/or retrained based at least on the modification of the at least one feature of the one or more features. Thus, in various embodiments, reconfiguration and retraining of the trained model involves user input and user specification, enabling specific configuration of the trained model to improve the trained model's accuracy and efficiency.

Similarly, in various embodiments, the executable instructions, when executed by the processor, further cause the processor to provide an output via the user interface of an indication of one or more generated features and to receive, via the user interface, a modification of the one or more generated features. In various embodiments then, the anomaly score for the data stream is based at least on the modification of the one or more generated features. Thus, various embodiments enable specific configuration and customization of features used in the intelligent detection and prediction of asset anomalies to further improve accuracy in such detection and prediction.

According to another aspect of the present disclosure, a method is provided. In various embodiments, the method includes generating, via input to a user interface, one or more features based at least on sensor data collected from a plurality of sensors associated with an asset. The method further includes receiving a data stream comprising data associated with the asset and determining an anomaly score for the data stream based at least on the one or more features. The method further includes, in accordance with a determination that the anomaly score is indicative of a potential fault of the asset, generating fault data indicative of the potential fault and causing presentation of the fault data and an indication of the one or more features considered in the determination of the anomaly score via the user interface.

In various embodiments, the method further includes receiving a second data stream associated with a second asset and determining a second anomaly score for the second data stream based at least on the one or more features generated based at least on the sensor data collected from the plurality of sensors associated with the asset. In various embodiments, the method further includes, in accordance with a determination that the second anomaly score is indicative of a potential fault of the second asset, generating fault data indicative of the potential fault of the second asset and causing presentation of the fault data and an indication of the one or more features considered in the determination of the anomaly score via the user interface.

In various embodiments, the method further includes evaluating prediction accuracy of the trained model. The method further includes, in accordance with a determination that a prediction accuracy requirement for the trained model is satisfied, causing presentation of an indication of the determination that the prediction accuracy requirement for the trained model is satisfied via the user interface, receiving a modification of at least one feature of the one or more features via the user interface and in response to the presentation, and retraining the trained model based on the modification of the at least one feature of the one or more features. In various embodiments, the method further includes providing an output via the user interface of an indication of one or more generated features and receiving a modification of the one or more generated features. In various embodiments, the one or more features includes an average sensor value (e.g., temperature) from the plurality of sensors associated with the asset and a plurality of deltas from the average sensor value (e.g., temperature) each corresponding to a sensor.

According to yet another aspect of the present disclosure, a computer program product is provided. The computer program product includes at least one non-transitory computer-readable storage medium having computer-executable program code portions stored therein. The computer-executable program code portions include program code instructions configured to generate, via input to a user interface, one or more features based at least on sensor data collected from a plurality of sensors associated with an asset, receive a data stream comprising data associated with the asset, and determine an anomaly score for the data stream based at least on the one or more features. The computer-executable program code portions include program code instructions further configured to, in accordance with a determination that the anomaly score is indicative of a potential fault of the asset, generate fault data indicative of the potential fault and cause presentation of the fault data and an indication of the one or more features considered in the determination of the anomaly score via the user interface.

In various embodiments, the computer-executable program code portions include program code instructions further configured to receive a second data stream associated with a second asset and determining a second anomaly score for the second data stream based at least on the one or more features generated based at least on the sensor data collected from the plurality of sensors associated with the asset. In various embodiments, the computer-executable program code portions include program code instructions further configured to, in accordance with a determination that the second anomaly score is indicative of a potential fault of the second asset, generate fault data indicative of the potential fault of the second asset and cause presentation of the fault data and an indication of the one or more features considered in the determination of the anomaly score via the user interface.

In various embodiments, the computer-executable program code portions include program code instructions further configured to evaluate prediction accuracy of the trained model. The computer-executable program code portions include program code instructions further configured to, in accordance with a determination that a prediction accuracy requirement for the trained model is satisfied, cause presentation of an indication of the determination that the prediction accuracy requirement for the trained model is satisfied via the user interface, receive a modification of at least one feature of the one or more features via the user interface and in response to the presentation, and retrain the trained model based on the modification of the at least one feature of the one or more features. In various embodiments, the computer-executable program code portions include program code instructions further configured to provide an output via the user interface of an indication of one or more generated features and receiving a modification of the one or more generated features. In various embodiments, the one or more features includes an average sensor value (e.g., temperature) from the plurality of sensors associated with the asset and a plurality of deltas from the average sensor value (e.g., temperature) each corresponding to a sensor.

As such, by employing one or more techniques disclosed herein, asset anomalies are accurately detected and predicted. That is, the present disclosure enables improvements to asset anomaly detection/prediction accuracy. Comprehensive and complete information including fault data and an indication of the one or more features considered in the identification of a potential fault are provided to prompt user interaction and enable a user to reach a detailed understanding of the potential fault. Further configuration and/or training of models (e.g., machine learning models) used to detect and predict asset anomalies is also enabled in various embodiments, to further improve efficiency and accuracy of such models generally the detection and prediction of asset anomalies. Through various embodiments of the present disclosure, asset anomaly detection and prediction is advantageously scalable with extended functionality by using generated features to identify potential faults in other assets and applying such generated features to anomaly detection/prediction for multiple assets.

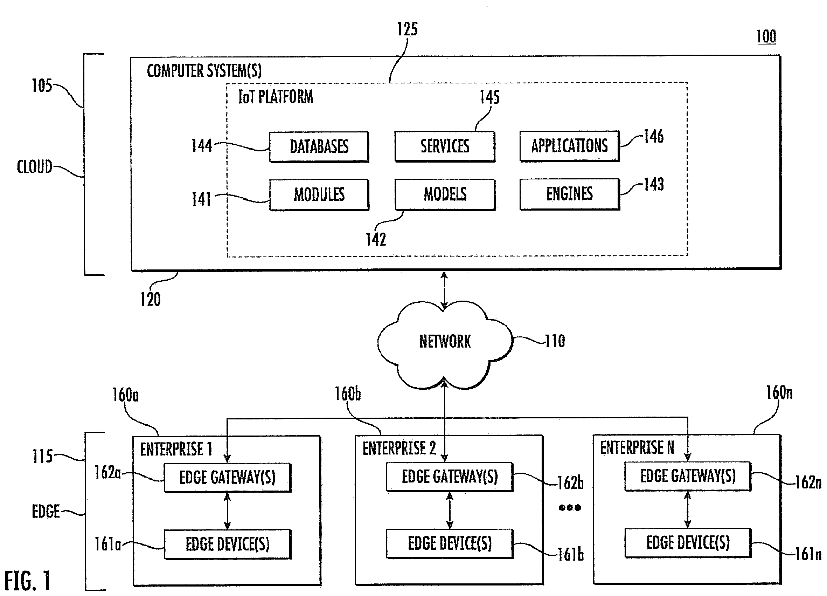

FIG. 1 illustrates an exemplary networked computing system environment 100, according to the present disclosure. As shown in FIG. 1, networked computing system environment 100 is organized into a plurality of layers including a cloud layer (e.g., cloud 105), a network layer, and an edge 115. As detailed further below, components of the edge 115 are in communication with components of the cloud 105 via network 110.

In various embodiments, network 110 is any suitable network or combination of networks and supports any appropriate protocol suitable for communication of data to and from components of the cloud 105 and between various other components in the networked computing system environment 100 (e.g., components of the edge 115). According to various embodiments, network 110 includes a public network (e.g., the Internet), a private network (e.g., a network within an organization), or a combination of public and/or private networks. According to various embodiments, network 110 is configured to provide communication between various components depicted in FIG. 1. According to various embodiments, network 110 comprises one or more networks that connect devices and/or components in the network layout to allow communication between the devices and/or components. For example, in one or more embodiments, the network 110 is implemented as the Internet, a wireless network, a wired network (e.g., Ethernet), a local area network (LAN), a Wide Area Network (WANs), Bluetooth, Near Field Communication (NFC), or any other type of network that provides communications between one or more components of the network layout. In some embodiments, network 110 is implemented using cellular networks, satellite, licensed radio, or a combination of cellular, satellite, licensed radio, and/or unlicensed radio networks.

Components of the cloud 105 include one or more computer systems 120 that form a so-called "Internet-of-Things" or "IoT" platform 125. It should be appreciated that "IoT platform" is an optional term describing a platform connecting any type of Internet-connected device, and should not be construed as limiting on the types of computing systems useable within IoT platform 125. In particular, in various embodiments, computer systems 120 includes any type or quantity of one or more processors and one or more data storage devices comprising memory for storing and executing applications or software modules of networked computing system environment 100. In one embodiment, the processors and data storage devices are embodied in serverclass hardware, such as enterprise-level servers. For example, in an embodiment, the processors and data storage devices comprise any type or combination of application servers, communication servers, web servers, super-computing servers, database servers, file servers, mail servers, proxy servers, and/ virtual servers. Further, the one or more processors are configured to access the memory and execute processor-readable instructions, which when executed by the processors configures the processors to perform a plurality of functions of the networked computing system environment 100.

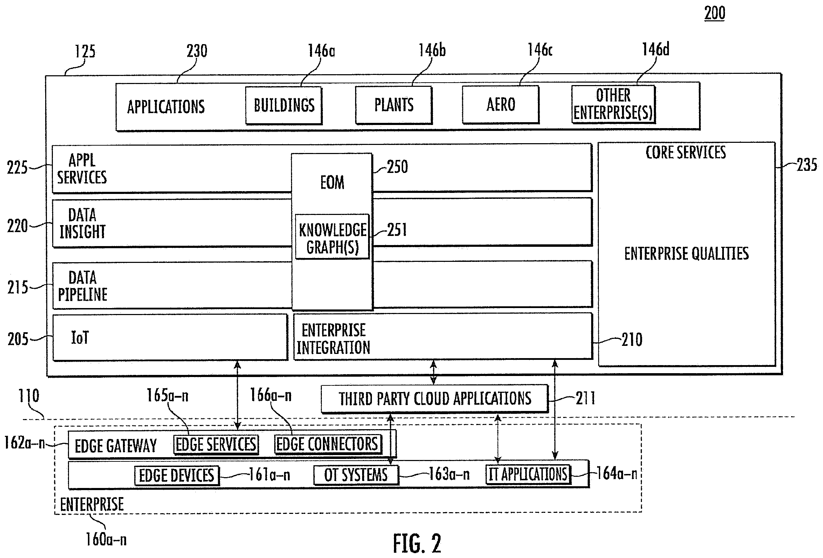

Computer systems 120 further include one or more software components of the IoT platform 125. For example, in one or more embodiments, the software components of computer systems 120 include one or more software modules to communicate with user devices and/or other computing devices through network 110. For example, in one or more embodiments, the software components include one or more modules 141, models 142, engines 143, databases 144, services 145, and/or applications 146, which may be stored in/by the computer systems 120 (e.g., stored on the memory), as detailed with respect to FIG. 2 below. According to various embodiments, the one or more processors are configured to utilize the one or more modules 141, models 142, engines 143, databases 144, services 145, and/or applications 146 when performing various methods and blocks thereof described in this disclosure.

Accordingly, in one or more embodiments, computer systems 120 execute a cloud computing platform (e.g., IoT platform 125) with scalable resources for computation and/or data storage, and may run one or more applications on the cloud computing platform to perform various computer-implemented methods described in this disclosure. In some embodiments, some of the modules 141, models 142, engines 143, databases 144, services 145, and/or applications 146 are combined to form fewer modules, models, engines, databases, services, and/or applications. In some embodiments, some of the modules 141, models 142, engines 143, databases 144, services 145, and/or applications 146 are separated into separate, more numerous modules, models, engines, databases, services, and/or applications. In some embodiments, some of the modules 141, models 142, engines 143, databases 144, services 145, and/or applications 146 are removed while others are added.

The computer systems 120 are configured to receive data from other components (e.g., components of the edge 115) of networked computing system environment 100 via network 110. Computer systems 120 are further configured to utilize the received data to produce a result. According to various embodiments, information indicating the result is transmitted to users via user computing devices over network 110. In some embodiments, the computer systems 120 is a server system that provides one or more services including providing the information indicating the received data and/or the result(s) to the users. According to various embodiments, computer systems 120 are part of an entity which include any type of company, organization, or institution that implements one or more IoT services. In some examples, the entity is an IoT platform provider.

Components of the edge 115 include one or more enterprises 160a-160n each including one or more edge devices 161a-161n and one or more edge gateways 162a-162n. For example, a first enterprise 160a includes first edge devices 161a and first edge gateways 162a, a second enterprise 160b includes second edge devices 161b and second edge gateways 162b, and an nth enterprise 160n includes nth edge devices 161n and nth edge gateways 162n. As used herein, enterprises 160a-160n represent any type of entity, facility, or vehicle, such as, for example, companies, divisions, buildings, manufacturing plants, warehouses, real estate facilities, laboratories, aircraft, spacecraft, automobiles, ships, boats, military vehicles, oil and gas facilities, or any other type of entity, facility, and/or entity that includes any number of local devices.

According to various embodiments, the edge devices 161a-161n represent any of a variety of different types of devices that may be found within the enterprises 160a-160n. Edge devices 161a-161n are any type of device configured to access network 110, or be accessed by other devices through network 110, such as via an edge gateway 162a-162n. According to various embodiments, edge devices 161a-161n are "IoT devices" which include any type of network-connected (e.g., Internet-connected) device. For example, in one or more embodiments, the edge devices 161a-161n include assets, sensors, actuators, processors, computers, valves, pumps, ducts, vehicle components, cameras, displays, doors, windows, security components, boilers, chillers, pumps, air handler units, HVAC components, factory equipment, and/or any other devices that are connected to the network 110 for collecting, sending, and/or receiving information. Each edge device 161a-161n includes, or is otherwise in communication with, one or more controllers for selectively controlling a respective edge device 161a-161n and/or for sending/receiving information between the edge devices 161a-161n and the cloud 105 via network 110. With reference to FIG. 2, in one or more embodiments, the edge 115 include operational technology (OT) systems 163a-163n and information technology (IT) applications 164a-164n of each enterprise 161a-161n. The OT systems 163a-163n include hardware and software for detecting and/or causing a change, through the direct monitoring and/or control of industrial equipment (e.g., edge devices 161a-161n), assets, processes, and/or events. The IT applications 164a-164n includes network, storage, and computing resources for the generation, management, storage, and delivery of data throughout and between organizations.

The edge gateways 162a-162n include devices for facilitating communication between the edge devices 161a-161n and the cloud 105 via network 110. For example, the edge gateways 162a-162n include one or more communication interfaces for communicating with the edge devices 161a-161n and for communicating with the cloud 105 via network 110. According to various embodiments, the communication interfaces of the edge gateways 162a-162n include one or more cellular radios, Bluetooth, WiFi, near-field communication radios, Ethernet, or other appropriate communication devices for transmitting and receiving information. According to various embodiments, multiple communication interfaces are included in each gateway 162a-162n for providing multiple forms of communication between the edge devices 161a-161n, the gateways 162a-162n, and the cloud 105 via network 110. For example, in one or more embodiments, communication are achieved with the edge devices 161a-161n and/or the network 110 through wireless communication (e.g., WiFi, radio communication, etc.) and/or a wired data connection (e.g., a universal serial bus, an onboard diagnostic system, etc.) or other communication modes, such as a local area network (LAN), wide area network (WAN) such as the Internet, a telecommunications network, a data network, or any other type of network.

According to various embodiments, the edge gateways 162a-162n also include a processor and memory for storing and executing program instructions to facilitate data processing. For example, in one or more embodiments, the edge gateways 162a-162n are configured to receive data from the edge devices 161a-161n and process the data prior to sending the data to the cloud 105. Accordingly, in one or more embodiments, the edge gateways 162a-162n include one or more software modules or components for providing data processing services and/or other services or methods of the present disclosure. With reference to FIG. 2, each edge gateway 162a-162n includes edge services 165a-165n and edge connectors 166a-166n. According to various embodiments, the edge services 165a-165n include hardware and software components for processing the data from the edge devices 161a-161n. According to various embodiments, the edge connectors 166a-166n include hardware and software components for facilitating communication between the edge gateway 162a-162n and the cloud 105 via network 110, as detailed above. In some cases, any of edge devices 161a-n, edge connectors 166a-n, and edge gateways 162a-n have their functionality combined, omitted, or separated into any combination of devices. In other words, an edge device and its connector and gateway need not necessarily be discrete devices.

FIG. 2 illustrates a schematic block diagram of framework 200 of the IoT platform 125, according to the present disclosure. The IoT platform 125 of the present disclosure is a platform for enterprise performance management that uses real-time accurate models and visual analytics to deliver intelligent actionable recommendations and/or analytics for sustained peak performance of the enterprises 160a-160n. The IoT platform 125 is an extensible platform that is portable for deployment in any cloud or data center environment for providing an enterprise-wide, top to bottom view, displaying the status of processes, assets, people, and safety. Further, the IoT platform 125 supports end-to-end capability to execute digital twins against process data and to translate the output into actionable insights, using the framework 200, detailed further below.

As shown in FIG. 2, the framework 200 of the IoT platform 125 comprises a number of layers including, for example, an IoT layer 205, an enterprise integration layer 210, a data pipeline layer 215, a data insight layer 220, an application services layer 225, and an applications layer 230. The IoT platform 125 also includes a core services layer 235 and an extensible object model (EOM) 250 comprising one or more knowledge graphs 251. The layers 205-235 further include various software components that together form each layer 205-235. For example, in one or more embodiments, each layer 205-235 includes one or more of the modules 141, models 142, engines 143, databases 144, services 145, applications 146, or combinations thereof. In some embodiments, the layers 205-235 are combined to form fewer layers. In some embodiments, some of the layers 205-235 are separated into separate, more numerous layers. In some embodiments, some of the layers 205-235 are removed while others may be added.

The IoT platform 125 is a model-driven architecture. Thus, the extensible object model 250 communicates with each layer 205-230 to contextualize site data of the enterprise 160a-160n using an extensible graph-based object model (or "asset model"). In one or more embodiments, the extensible object model 250 is associated with knowledge graphs 251 where the equipment (e.g., edge devices 161a-161n) and processes of the enterprise 160a-160n are modeled. The knowledge graphs 251 of EOM 250 are configured to store the models in a central location. The knowledge graphs 251 define a collection of nodes and links that describe real-world connections that enable smart systems. As used herein, a knowledge graph 251: (i) describes real-world entities (e.g., edge devices 161a-161n) and their interrelations organized in a graphical interface; (ii) defines possible classes and relations of entities in a schema; (iii) enables interrelating arbitrary entities with each other; and (iv) covers various topical domains. In other words, the knowledge graphs 251 define large networks of entities (e.g., edge devices 161a-161n), semantic types of the entities, properties of the entities, and relationships between the entities. Thus, the knowledge graphs 251 describe a network of "things" that are relevant to a specific domain or to an enterprise or organization. Knowledge graphs 251 are not limited to abstract concepts and relations, but can also contain instances of objects, such as, for example, documents and datasets. In some embodiments, the knowledge graphs 251 include resource description framework (RDF) graphs. As used herein, an "RDF graph" is a graph data model that formally describes the semantics, or meaning, of information. The RDF graph also represents metadata (e.g., data that describes data). According to various embodiments, knowledge graphs 251 also include a semantic object model. The semantic object model is a subset of a knowledge graph 251 that defines semantics for the knowledge graph 251. For example, the semantic object model defines the schema for the knowledge graph 251.

As used herein, EOM 250 includes a collection of application programming interfaces (APIs) that enables seeded semantic object models to be extended. For example, the EOM 250 of the present disclosure enables a customer's knowledge graph 251 to be built subject to constraints expressed in the customer's semantic object model. Thus, the knowledge graphs 251 are generated by customers (e.g., enterprises or organizations) to create models of the edge devices 161a-161n of an enterprise 160a-160n, and the knowledge graphs 251 are input into the EOM 250 for visualizing the models (e.g., the nodes and links).

The models describe the assets (e.g., the nodes) of an enterprise (e.g., the edge devices 161a-161n) and describe the relationship of the assets with other components (e.g., the links). The models also describe the schema (e.g., describe what the data is), and therefore the models are self-validating. For example, in one or more embodiments, the model describes the type of sensors mounted on any given asset (e.g., edge device 161a-161n) and the type of data that is being sensed by each sensor. According to various embodiments, a KPI framework is used to bind properties of the assets in the extensible object model 250 to inputs of the KPI framework. Accordingly, the IoT platform 125 is an extensible, model-driven end-to-end stack including: two-way model sync and secure data exchange between the edge 115 and the cloud 105, metadata driven data processing (e.g., rules, calculations, and aggregations), and model driven visualizations and applications. As used herein, "extensible" refers to the ability to extend a data model to include new properties/columns/fields, new classes/tables, and new relations. Thus, the IoT platform 125 is extensible with regards to edge devices 161a-161n and the applications 146 that handle those devices 161a-161n. For example, when new edge devices 161a-161n are added to an enterprise 160a-160n system, the new devices 161a-161n will automatically appear in the IoT platform 125 so that the corresponding applications 146 understand and use the data from the new devices 161a-161n.

In some cases, asset templates are used to facilitate configuration of instances of edge devices 161a-161n in the model using common structures. An asset template defines the typical properties for the edge devices 161a-161n of a given enterprise 160a-160n for a certain type of device. For example, an asset template of a pump includes modeling the pump having inlet and outlet pressures, speed, flow, etc. The templates may also include hierarchical or derived types of edge devices 161a-161n to accommodate variations of a base type of device 161a-161n. For example, a reciprocating pump is a specialization of a base pump type and would include additional properties in the template. Instances of the edge device 161a-161n in the model are configured to match the actual, physical devices of the enterprise 160a-160n using the templates to define expected attributes of the device 161a-161n. Each attribute is configured either as a static value (e.g., capacity is 1000 BPH) or with a reference to a time series tag that provides the value. The knowledge graph 250 can automatically map the tag to the attribute based on naming conventions, parsing, and matching the tag and attribute descriptions and/or by comparing the behavior of the time series data with expected behavior. In one or more embodiments, each of the key attribute contributing to one or more metrics to drive a dashboard is marked with one or more metric tags such that a dashboard visualization is generated.

The modeling phase includes an onboarding process for syncing the models between the edge 115 and the cloud 105. For example, in one or more embodiments, the onboarding process includes a simple onboarding process, a complex onboarding process, and/or a standardized rollout process. The simple onboarding process includes the knowledge graph 250 receiving raw model data from the edge 115 and running context discovery algorithms to generate the model. The context discovery algorithms read the context of the edge naming conventions of the edge devices 161a-161n and determine what the naming conventions refer to. For example, in one or more embodiments, the knowledge graph 250 receives "TMP" during the modeling phase and determine that "TMP" relates to "temperature." The generated models are then published. The complex onboarding process includes the knowledge graph 250 receiving the raw model data, receiving point history data, and receiving site survey data. According to various embodiments, the knowledge graph 250 then uses these inputs to run the context discovery algorithms. According to various embodiments, the generated models are edited and then the models are published. The standardized rollout process includes manually defining standard models in the cloud 105 and pushing the models to the edge 115.

The IoT layer 205 includes one or more components for device management, data ingest, and/or command/control of the edge devices 161a-161n. The components of the IoT layer 205 enable data to be ingested into, or otherwise received at, the IoT platform 125 from a variety of sources. For example, in one or more embodiments, data is ingested from the edge devices 161a-161n through process historians or laboratory information management systems. The IoT layer 205 is in communication with the edge connectors 165a-165n installed on the edge gateways 162a-162n through network 110, and the edge connectors 165a-165n send the data securely to the IoT platform 205. In some embodiments, only authorized data is sent to the IoT platform 125, and the IoT platform 125 only accepts data from authorized edge gateways 162a-162n and/or edge devices 161a-161n. According to various embodiments, data is sent from the edge gateways 162a-162n to the IoT platform 125 via direct streaming and/or via batch delivery. Further, after any network or system outage, data transfer will resume once communication is re-established and any data missed during the outage will be backfilled from the source system or from a cache of the IoT platform 125. According to various embodiments, the IoT layer 205 also includes components for accessing time series, alarms and events, and transactional data via a variety of protocols.

The enterprise integration layer 210 includes one or more components for events/messaging, file upload, and/or REST/OData. The components of the enterprise integration layer 210 enable the IoT platform 125 to communicate with third party cloud applications 211, such as any application(s) operated by an enterprise in relation to its edge devices. For example, the enterprise integration layer 210 connects with enterprise databases, such as guest databases, customer databases, financial databases, patient databases, etc. The enterprise integration layer 210 provides a standard application programming interface (API) to third parties for accessing the IoT platform 125. The enterprise integration layer 210 also enables the IoT platform 125 to communicate with the OT systems 163a-163n and IT applications 164a-164n of the enterprise 160a-160n. Thus, the enterprise integration layer 210 enables the IoT platform 125 to receive data from the third-party applications 211 rather than, or in combination with, receiving the data from the edge devices 161a-161n directly.

The data pipeline layer 215 includes one or more components for data cleansing/enriching, data transformation, data calculations/aggregations, and/or API for data streams. Accordingly, in one or more embodiments, the data pipeline layer 215 preprocesses and/or performs initial analytics on the received data. The data pipeline layer 215 executes advanced data cleansing routines including, for example, data correction, mass balance reconciliation, data conditioning, component balancing and simulation to ensure the desired information is used as a basis for further processing. The data pipeline layer 215 also provides advanced and fast computation. For example, cleansed data is run through enterprise-specific digital twins. According to various embodiments, the enterprise-specific digital twins include a reliability advisor containing process models to determine the current operation and the fault models to trigger any early detection and determine an appropriate resolution. According to various embodiments, the digital twins also include an optimization advisor that integrates real-time economic data with real-time process data, selects the right feed for a process, and determines optimal process conditions and product yields.

According to various embodiments, the data pipeline layer 215 employs models and templates to define calculations and analytics. Additionally or alternatively, according to various embodiments, the data pipeline layer 215 employs models and templates to define how the calculations and analytics relate to the assets (e.g., the edge devices 161a-161n). For example, in an embodiment, a pump template defines pump efficiency calculations such that every time a pump is configured, the standard efficiency calculation is automatically executed for the pump. The calculation model defines the various types of calculations, the type of engine that should run the calculations, the input and output parameters, the preprocessing requirement and prerequisites, the schedule, etc. According to various embodiments, the actual calculation or analytic logic is defined in the template or it may be referenced. Thus, according to various embodiments, the calculation model is employed to describe and control the execution of a variety of different process models. According to various embodiments, calculation templates are linked with the asset templates such that when an asset (e.g., edge device 161a-161n) instance is created, any associated calculation instances are also created with their input and output parameters linked to the appropriate attributes of the asset (e.g., edge device 161a-161n).

According to various embodiments, the IoT platform 125 supports a variety of different analytics models including, for example, first principles models, empirical models, engineered models, user-defined models, machine learning models, built-in functions, and/or any other types of analytics models. Fault models and predictive maintenance models will now be described by way of example, but any type of models may be applicable.

Fault models are used to compare current and predicted enterprise 160a-160n performance to identify issues or opportunities, and the potential causes or drivers of the issues or opportunities. The IoT platform 125 includes rich hierarchical symptom-fault models to identify abnormal conditions and their potential consequences. For example, in one or more embodiments, the IoT platform 125 drill downs from a high-level condition to understand the contributing factors, as well as determining the potential impact a lower level condition may have. There may be multiple fault models for a given enterprise 160a-160n looking at different aspects such as process, equipment, control, and/or operations. According to various embodiments, each fault model identifies issues and opportunities in their domain, and can also look at the same core problem from a different perspective. According to various embodiments, an overall fault model is layered on top to synthesize the different perspectives from each fault model into an overall assessment of the situation and point to the true root cause.

According to various embodiments, when a fault or opportunity is identified, the IoT platform 125 provides recommendations about an optimal corrective action to take. Initially, the recommendations are based on expert knowledge that has been preprogrammed into the system by process and equipment experts. A recommendation services module presents this information in a consistent way regardless of source, and supports workflows to track, close out, and document the recommendation follow-up. According to various embodiments, the recommendation follow-up is employed to improve the overall knowledge of the system over time as existing recommendations are validated (or not) or new cause and effect relationships are learned by users and/or analytics.

According to various embodiments, the models are used to accurately predict what will occur before it occurs and interpret the status of the installed base. Thus, the IoT platform 125 enables operators to quickly initiate maintenance measures when irregularities occur. According to various embodiments, the digital twin architecture of the IoT platform 125 employs a variety of modeling techniques. According to various embodiments, the modeling techniques include, for example, rigorous models, fault detection and diagnostics (FDD), descriptive models, predictive maintenance, prescriptive maintenance, process optimization, and/or any other modeling technique.

According to various embodiments, the rigorous models are converted from process design simulation. In this manner, process design is integrated with feed conditions and production requirement. Process changes and technology improvement provide business opportunities that enable more effective maintenance schedule and deployment of resources in the context of production needs. The fault detection and diagnostics include generalized rule sets that are specified based on industry experience and domain knowledge and can be easily incorporated and used working together with equipment models. According to various embodiments, the descriptive models identifies a problem and the predictive models determines possible damage levels and maintenance options. According to various embodiments, the descriptive models include models for defining the operating windows for the edge devices 161a-161n.

Predictive maintenance includes predictive analytics models developed based on rigorous models and statistic models, such as, for example, principal component analysis (PCA) and partial least square (PLS). According to various embodiments, machine learning methods are applied to train models for fault prediction. According to various embodiments, predictive maintenance leverages FDD-based algorithms to continuously monitor individual control and equipment performance. Predictive modeling is then applied to a selected condition indicator that deteriorates in time. Prescriptive maintenance includes determining an optimal maintenance option and when it should be performed based on actual conditions rather than time-based maintenance schedule. According to various embodiments, prescriptive analysis selects the right solution based on the company's capital, operational, and/or other requirements. Process optimization is determining optimal conditions via adjusting set-points and schedules. The optimized set-points and schedules can be communicated directly to the underlying controllers, which enables automated closing of the loop from analytics to control.

The data insight layer 220 includes one or more components for time series databases (TDSB), relational/document databases, data lakes, blob, files, images, and videos, and/or an API for data query. According to various embodiments, when raw data is received at the IoT platform 125, the raw data is stored as time series tags or events in warm storage (e.g., in a TSDB) to support interactive queries and to cold storage for archive purposes. According to various embodiments, data is sent to the data lakes for offline analytics development. According to various embodiments, the data pipeline layer 215 accesses the data stored in the databases of the data insight layer 220 to perform analytics, as detailed above.

The application services layer 225 includes one or more components for rules engines, workflow/notifications, KPI framework, insights (e.g., actionable insights), decisions, recommendations, machine learning, and/or an API for application services. The application services layer 225 enables building of applications 146a-d. The applications layer 230 includes one or more applications 146a-d of the IoT platform 125. For example, according to various embodiments, the applications 146a-d includes a buildings application 146a, a plants application 146b, an aero application 146c, and other enterprise applications 146d. According to various embodiments, the applications 146 includes general applications 146 for portfolio management, asset management, autonomous control, and/or any other custom applications. According to various embodiments, portfolio management includes the KPI framework and a flexible user interface (UI) builder. According to various embodiments, asset management includes asset performance and asset health. According to various embodiments, autonomous control includes energy optimization and/or predictive maintenance. As detailed above, according to various embodiments, the general applications 146 is extensible such that each application 146 is configurable for the different types of enterprises 160a-160n (e.g., buildings application 146a, plants application 146b, aero application 146c, and other enterprise applications 146d).

The applications layer 230 also enables visualization of performance of the enterprise 160a-160n. For example, dashboards provide a high-level overview with drill downs to support deeper investigations. Recommendation summaries give users prioritized actions to address current or potential issues and opportunities. Data analysis tools support ad hoc data exploration to assist in troubleshooting and process improvement.

The core services layer 235 includes one or more services of the IoT platform 125. According to various embodiments, the core services 235 include data visualization, data analytics tools, security, scaling, and monitoring. According to various embodiments, the core services 235 also include services for tenant provisioning, single login/common portal, self-service admin, UI library/UI tiles, identity/access/entitlements, logging/monitoring, usage metering, API gateway/dev portal, and the IoT platform 125 streams.

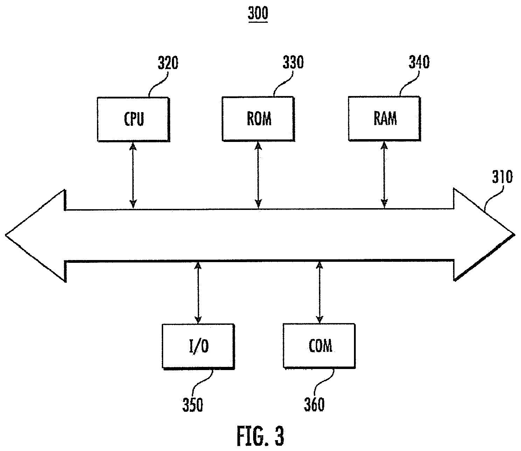

FIG. 3 depicts an example system 300 that is configured to perform and/or execute techniques presented herein. FIG. 3 is a simplified functional block diagram of a computer that may be configured to execute techniques described herein, according to exemplary embodiments of the present disclosure. Specifically, the computer (or "platform" as it may not be a single physical computer infrastructure) may include a data communication interface 360 for packet data communication. The platform also may include a central processing unit ("CPU") 320, in the form of one or more processors, for executing program instructions. The platform may include an internal communication bus 310, and the platform also may include a program storage and/or a data storage for various data files to be processed and/or communicated by the platform such as ROM 330 and RAM 340, although the system 300 may receive programming and data via network communications. The system 300 also may include input and output ports 350 to connect with input and output devices such as keyboards, mice, touchscreens, monitors, displays, etc. Of course, the various system functions may be implemented in a distributed fashion on a number of similar platforms, to distribute the processing load. Alternatively, the systems may be implemented by appropriate programming of one computer hardware platform.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure also may be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the Internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

Program aspects of the technology may be thought of as "products" or "articles of manufacture" typically in the form of executable code and/or associated data that is carried on or embodied in a type of machine-readable medium. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer of the mobile communication network into the computer platform of a server and/or from a server to the mobile device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links, or the like, also may be considered as media bearing the software. As used herein, unless restricted to non-transitory, tangible "storage" media, terms such as computer or machine "readable medium" refer to any medium that participates in providing instructions to a processor for execution.

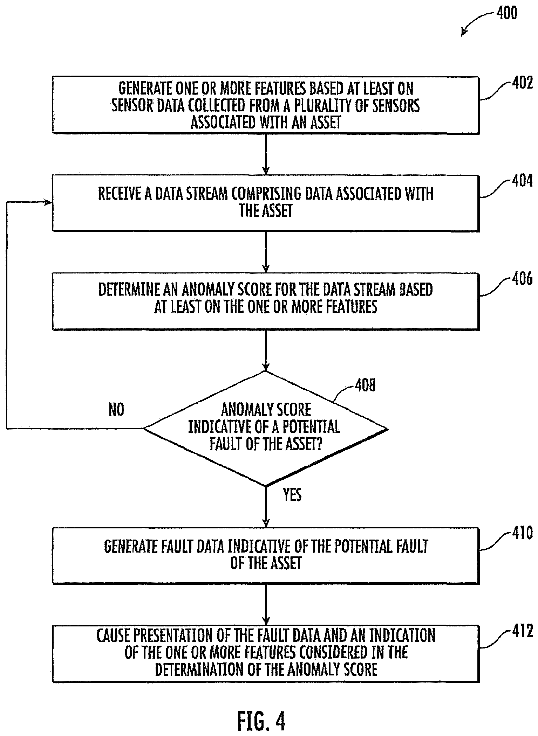

Referring now to FIG. 4, a method 400 is provided for intelligently detecting and predicting asset anomalies based at least on generating features that more accurately and comprehensively characterize an asset. In various embodiments, the system 300 is configured to perform each operation of the method 400. For example, the system 300 comprises means, such as CPU 320, communication interface 360, and/or the like, for performing each operation of the method 400. In one or more embodiments, the method 400 is executed at a device (e.g., the system 300) with one or more processors and a memory. In one or more embodiments, the method 400 begins at block 402. Block 402 comprises generating one or more features based at least on sensor data collected from a plurality of sensors associated with an asset.

In various embodiments, the sensor data collected from a plurality of sensors associated with an asset are associated with a particular domain, application, and/or the like. In one or more embodiments, the sensor data describes temperatures measured by each of the plurality of sensors for a plurality of components, locations, portions, and/or the like of the asset. For example, the sensor data includes and/or describes a reactor temperature profile for specific example applications of anomaly detection/prediction for catalyst deactivation during reactor operations. As yet a further example, the sensor data includes and/or describes furnace coil output temperature profiles for specific example applications of prediction for coke build up during furnace operation. Generally then, the sensor data includes data (e.g., values, profiles, parameters) that characterizes an aspect of the asset and is of interest or related to various anomalies that should be detected and predicted.

In various embodiments, the sensor data includes a temporal aspect or dimension. That is, the sensor data is collected over time by the plurality of sensors associated with the asset. In one or more embodiments, the sensor data is collected substantially according to a normal operating period of the asset by the plurality of sensors. As such, the sensor data is representative of a normal operation condition of the asset. In one or more embodiments, at least a portion of the time spanned by the sensor data is labelled as a normal operating period.

In various embodiments, the sensor data is comprised of a plurality of sensor signals each corresponding to a sensor associated with the asset, and the one or more features are generated based at least on performing correlational analysis between different sensor signals and/or different sensors. In one or more embodiments, performing correlational analysis between different sensor signals and/or different sensors comprises determining a Pearson correlation coefficient, a Spearman correlation coefficient, and/or the like between each pair of sensor signals of the sensor data and generating a correlation matrix based at least on the determined correlation coefficients. It may be appreciated that due to the pairwise nature of the correlational analysis, the correlation matrix is an upper-diagonal square matrix. Using the correlation matrix, one or more portions of the sensor data (e.g., one or more sensor signals) that may be interrelated, interdependent, and/or correlated are identified, and the one or more features are specifically generated based at least on the identified portions of the sensor data. Thus, portions of the sensor data (e.g., specific sensor signals from specific sensors associated with the asset) that are uninformative, uncharacteristic, and/or irrelevant to this anomaly detection/prediction are filtered from the sensor data or ignored.

In one or more embodiments, the one or more features generated include an average sensor value (e.g., temperature) across different sensor signals at each time discretization (e.g., a timestamp) within the normal operating period captured the sensor data. The different sensor signals are specifically the sensor signals or portions of the sensor data determined to be informative, characteristic, and relevant based at least on the correlational analysis. The one or more features further include deltas from the average sensor value (e.g., temperature differences from the average temperature) for each sensor signal at each time discretization. Thus, at each time discretization of the normal operating period, an average sensor value and individual deltas each corresponding to a sensor signal and/or a sensor associated with the asset are determined. In some example embodiments, the one or more features generated further include an average sensor value with respect to time for each sensor signal.

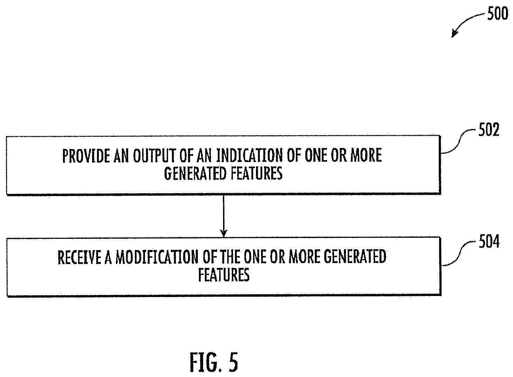

In one or more embodiments, correlational analysis (e.g., generation and analysis of a correlation matrix) is performed again to confirm the selection of the different sensor signals or portions of the sensor data for the generation of the one or more features. Referring to FIG. 5, a method 500 is provided for configuration of the one or more features. In various embodiments, the system 300 is configured to perform each operation of the method 500. For example, the system 300 comprises means, such as CPU 320, communication interface 360, and/or the like, for performing each operation of the method 500. In one or more embodiments, the method 500 is executed at a device (e.g., the system 300) with one or more processors and a memory.

In one or more embodiments, the method 500 begins with block 502 for providing an output of an indication of the one or more features generated. The indication of the one or more features generated is provided via a user interface. The method 500 further includes block 504 for receiving, via the user interface, a modification of the one or more generated features. For example, the modification is received in response to the indication provided. According to method 500 then, a user examines the one or more features generated from the sensor data and that will be used for anomaly detection/prediction and can modify any of the one or more features to customize the anomaly detection/prediction (e.g., to improve accuracy of some features).

Returning to FIG. 4, a data stream comprising data associated with the asset is received at block 404. In one embodiments, the data stream comprises data collected the plurality of sensors associated with the asset. Thus, the data of the data stream is also sensor data. The data stream comprises data to be monitored for potential anomalies and faults. For example, the data stream comprises data collected during operation of the asset for which anomaly detection/prediction is required or desired.

The method 400 further includes block 406 that determines an anomaly score for the data stream based at least on the one or more features. The anomaly score is indicative of the operation of the asset and potential faults predicted to occur. For example, the anomaly score may be high when asset operation is irregular, anomalous, dangerous, and/or the like, and the anomaly score may be low when asset operation is regular, normal, and/or safe. In one or more embodiments, the anomaly score is inversely proportional to a health index of the asset, which is a measure indicative of the safety and health of the asset.

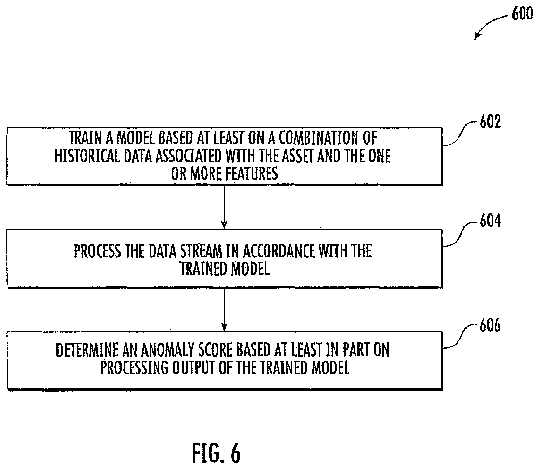

FIG. 6 illustrates a method 600 for determining an anomaly score based at least on the one or more features. The method 600 is an example embodiment of the block 406. In various embodiments, the system 300 is configured to perform each operation of the method 600. For example, the system 300 comprises means, such as CPU 320, communication interface 360, and/or the like, for performing each operation of the method 600. In one or more embodiments, the method 600 is executed at a device (e.g., the system 300) with one or more processors and a memory.

In one or more embodiments, the method 600 begins with block 602, which involves training a model based at least on a combination of historical data associated with the asset and the one or more features. The model is an advanced pattern recognition model that can be configured (e.g., trained) to recognize aberrations, irregularities, significant changes, and/or the like to a particular pattern or profile. For example, the model is a moving-mean principal component analysis (MMPCA) model, an autoencoder model, and/or the like. Thus, the model is specifically trained to intelligently detect anomalies based at least on recognizing aberrations, irregularities, significant changes, and/or the like in the data stream.

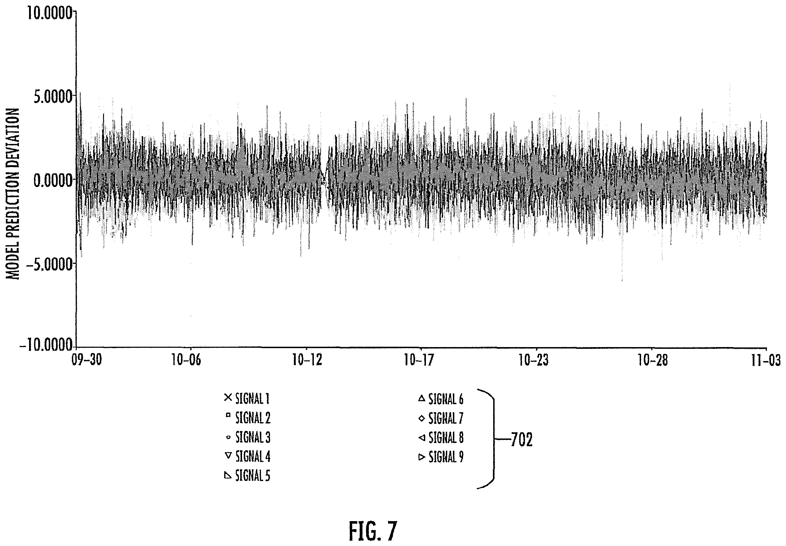

To do so, the model is trained to understand, regenerate, predict, and/or the like normal and non-anomalous sensor data collected from the plurality of sensors associated with an asset and/or feature data. FIG. 7 illustrates example data relating to the training of the model. In particular, the example data shown in FIG. 7 illustrates the deviation between feature data extracted from historical data associated with the asset and predicted feature data generated by a trained model. The historical data is sensor data collected from the plurality of sensors associated with the asset at a previous time period, and the feature data is extracted from the historical data according to the one or more features. As previously discussed, the one or more features include the average sensor value and a plurality of deltas for each sensor signal 702. Feature data extracted from historical data indicative of normal operation of the asset is provided to the model to train the model to predict feature data indicative of normal operation of the asset.

Specifically then, FIG. 7 illustrates a plot of deviations between a trained model's predictions of temperature deltas of nine sensor signals 702 and the actual temperature delta of the nine sensor signals 702 for each time discretization extracted from the historical data. As is shown in the plot, the average deviation between the trained model's prediction of temperature deltas and the actual temperature deltas has low magnitude (e.g., close to zero) with reasonably small variation, for well-trained models in the training period. While FIG. 7 illustrates deviations between a trained model's predictions of feature data and actual feature data extracted from historical data, it is understood that while untrained, the model's predictions of feature data may deviate more, resulting in the magnitude of data plotted in FIG. 7 being higher. As training of the model progresses, such deviations decrease.

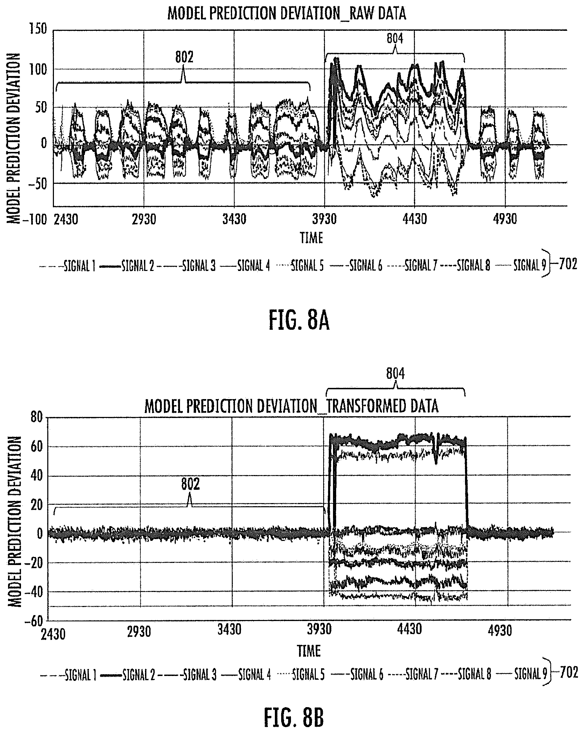

With the model fully trained as indicated in FIG. 7, the model is configured to predict feature data for normal operation of the asset and is then used to recognize anomalous operation of the asset. FIG. 8A and FIG. 8B illustrate data demonstrating the advantages of configuring the model to recognize and predict feature data, as opposed to raw sensor data alone. FIG. 8A illustrates a plot of deviations between a model's predicted raw sensor data and raw sensor data originating from the asset over a time period that includes a normal operation period 802 and an anomalous operation period 804. As shown, the deviations between model-predicted raw sensor data and actual raw sensor data in the normal operation period 802 and the same deviations in the anomalous operation period 804 are not significantly different and are hard to distinguish.

Meanwhile, FIG. 8B illustrates a plot of deviations between a model's predicted feature data and feature data originating from the asset over a time period that includes a normal operation period 802 and the anomalous operation period 804. The deviations of FIG. 8B originate from the same asset and time period as the deviations of FIG. 8A, but the deviations of FIG. 8B are with respect to feature data. Clearly, the deviations between model-predicted feature data and actual feature data in normal operation period 802 and in anomalous operation period 804 are significantly different and easier to distinguish. Accordingly, it is shown that generation and use of one or more features to distinguish normal operation period 802 and anomalous operation period 804 of an asset is advantageous in terms of accuracy of detection/prediction.

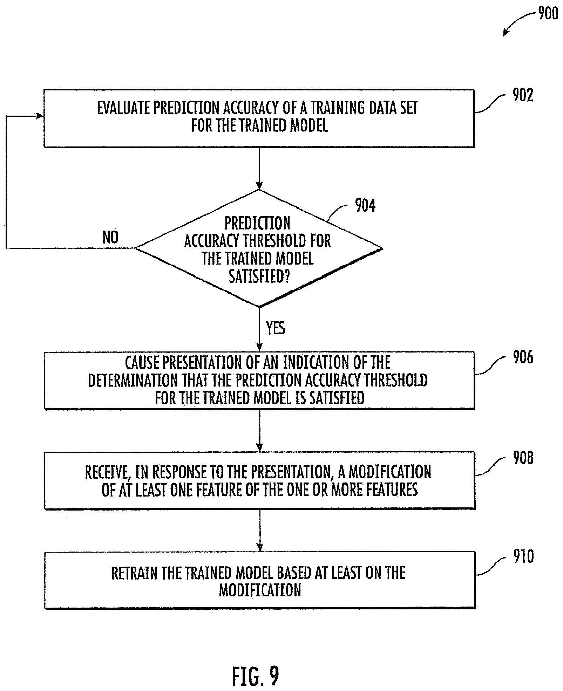

It has thus been described then that a trained model in various embodiments is configured to predict and recognize feature data indicative of normal asset operation. In some instances, configuration and training the model involves further user input and interaction. Turning to FIG. 9, a method 900 for reconfiguring and retraining the model is provided. In various embodiments, block 602 comprises method 900. That is, training a model also comprises reconfiguring and retraining the model. In various embodiments, the system 300 is configured to perform each operation of the method 900. For example, the system 300 comprises means, such as CPU 320, communication interface 360, and/or the like, for performing each operation of the method 900. In one or more embodiments, the method 900 is executed at a device (e.g., the system 300) with one or more processors and a memory.

In one or more embodiments, the method 900 begins with block 902 at which prediction accuracy of the trained model is evaluated. The prediction accuracy is a measure of how well the trained model identifies anomalous operation periods 804. In one or more embodiments, the prediction accuracy is based at least on a sensitivity of the trained model, a specificity of the trained model, a false positive rate of the trained model, and/or a false negative rate of the trained model. Such prediction accuracy is determined based at least on providing a testing data set to the model including sensor data from normal operation 802 and anomalous operation period 804 of the asset and determining whether the model distinguishes between the two periods.

In further embodiments, the prediction accuracy is determined according to the deviations between the predicted feature data determined by the model and the feature data originating from the asset (e.g., deviations shown in FIG. 7) satisfying a threshold or requirement. At decision point 904, in accordance with a determination that a prediction accuracy requirement for the trained model is satisfied, the method 900 proceeds to block 906. Otherwise, the model continues to be trained until an evaluated prediction accuracy satisfies the prediction accuracy requirement.

At block 906, presentation via the user interface of an indication of the determination that the prediction accuracy requirement for the trained model is satisfied is caused. For example, a notification stating that the model is fully trained is provided and caused to display.

In some instances, the method 900 proceeds to block 908 and block 910. At block 908, a modification of at least one feature of the one or more features is received via the user interface in response to the presentation. For example, a user chooses to further train or re-train the trained model by modifying at least one feature. At block 910, the trained model is retrained based at least on the modification of the at least one feature. In various embodiments, retraining the trained model involves providing more recent and more applicable sensor data associated with the asset. For example, the actual feature data from which the model-predicted feature data deviates in FIG. 7 is extracted from historical data associated with the asset from three years ago, and the model is retrained using more recent historical data. Method 900 may then be performed repeatedly to evaluate the prediction accuracy for the retrained model and enable further configuration by a user.

In various embodiments, the model is configured and/or trained at some time prior to receiving the data stream, as the training of the model is reliant on historical data and the one or more features. With the model being fully trained (or retrained) based at least on feature data extracted from the historical data according to the one or more features, the method 600 proceeds to block 604 at which the data stream is processed in accordance with the trained model. For example, the data stream is provided as input to the trained model. Specifically, processing the data stream comprises extracting feature data from the data stream according to the one or more features (e.g., similar to the feature data extracted from the historical data used for training the model) and identifying anomalous operation periods 804 using the trained model.

At block 606, an anomaly score is then determined based at least on processing output of the trained model (e.g., output or results from processing the data stream in block 604). That is, the anomaly score is determined based at least on the identification of anomalous operation periods 804 from the processing of the data stream in accordance with the trained model. In some embodiments, the anomaly score is determined based at least on a previous anomaly score or health index. For example, identification of anomalous operation periods 804 in the data stream results in an increase of anomaly score. In some embodiments, the anomaly score is determined based at least on an amount of time spanned by the anomalous operation periods 804 in the data stream. For example, the anomaly score increases by some amount and/or is proportional to the amount of anomalous operation periods 804 identified in the data stream.

Thus, method 600 provides an example embodiment of determining an anomaly score. Returning to FIG. 4, the method 400 proceeds to decision point 408. At decision point 408, a determination of whether the anomaly score is indicative of a potential fault of the asset is made. For example, the anomaly score is compared to one or more anomaly score thresholds. If the one or more anomaly score thresholds are satisfied, then it is determined that the anomaly score is not indicative of a potential fault of the asset. In contrast, it is determined that the anomaly score is indicative of a potential fault of the asset if an anomaly score threshold is not satisfied.

In accordance with a determination that the anomaly score is indicative of a potential fault of the asset at decision point 408, the method 400 continues to block 410. In one or more embodiments, the data stream is continuously received, and in accordance with a determination that the anomaly score is not indicative of any potential fault, anomaly scores continue to be determined for the data stream. That is, at decision point 408, the method 400 continues to block 404 and block 406 again in accordance with a determination that the anomaly score is not indicative of any potential fault.

Block 410 comprises generating fault data indicative of the potential fault of the asset. In various embodiments, the fault data provides additional and contextual information regarding the potential fault indicated by the anomaly score. For example, the fault data generated includes specific sensors or sensor signals 702 determined to be anomalous (e.g., large temperature delta associated with a sensor signal 702 from the average temperature), an amount of time spanned by anomalous operation periods 804, and/or the like. As a further example, the fault data includes a fault identifier (e.g., predicted via a fault classification model) and/or one or more fault messages describing the type of fault (e.g., excess temperatures, low temperatures, incorrect temperature relationships between sensors). The method 400 then includes block 412 that causes presentation of the fault data and an indication of the one or more features considered in the determination of the anomaly score via the user interface. Accordingly, a user can visually examine the fault data and reach an understanding of why the potential fault may occur, how the potential fault may occur, where within the asset the potential fault may occur, and/or the like.

With method 400 then, various operations, steps, techniques, processes, and/or the like are provided that enable the intelligent detection and prediction of asset anomalies. As mentioned, such functionality can be extended to additional assets other than the asset (e.g., the first asset) mentioned in the context of method 400. Specifically, various embodiments are applied to intelligently detecting and predicting asset anomalies and faults in a second asset simultaneous and/or in parallel to the anomaly detection/prediction for the first asset.

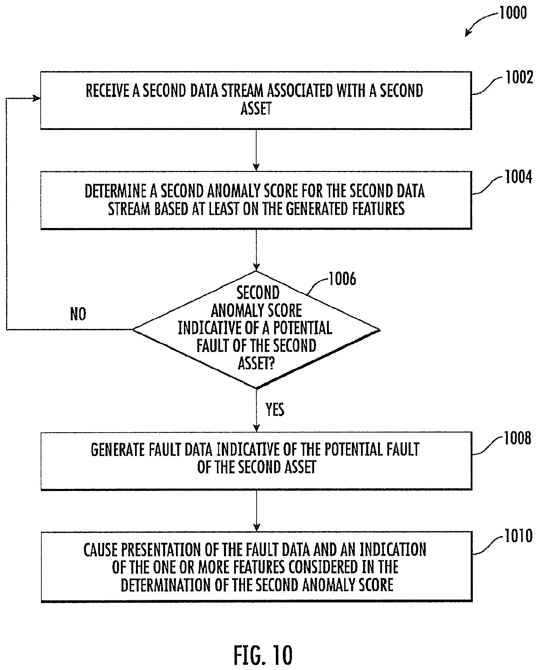

FIG. 10 illustrates a method 1000 for extending functionality of various embodiments of the present disclosure by applying intelligent anomaly detection and prediction to a second asset. In various embodiments, the system 300 is configured to perform each operation of the method 1000. For example, the system 300 comprises means, such as CPU 320, communication interface 360, and/or the like, for performing each operation of the method 1000. In one or more embodiments, the method 1000 is executed at a device (e.g., the system 300) with one or more processors and a memory.

In one or more embodiments, the method 1000 begins with block 1002, which involves receiving a second data stream associated with a second asset. In some embodiments, the second data stream is received concurrent with (e.g., simultaneous to) the data stream described in the context of method 400 and the first asset (e.g., the first data stream); however, the second data stream is independent and separate of the first data stream. Similar to the first data stream, the second data stream comprises sensor data collected from a second plurality of sensors associated with the second asset.

The method 1000 proceeds to block 1004. At block 1004, a second anomaly score for the second data stream is determined based at least on the generated features. Specifically, the second anomaly score is determined based at least on the features generated at block 402 for the first asset. Thus, the same features are used in a scalable manner for anomaly detection/prediction for multiple assets. As previously described, the features include an average sensor value across different sensor signals 702 at each time discretization and deltas of each sensor signal 702 from the average sensor value. An example embodiment of the determination of the second anomaly score is again provided by method 600. That is, the second anomaly score is determined using a trained model configured to identify anomalous operation periods 804 from processing the second data stream.

At decision point 1006 then, a determination of whether the second anomaly score is indicative of a potential fault of the second asset is made. For example, the second anomaly score is compared to one or more anomaly score thresholds to make the determination. In one or more embodiments, the second anomaly score is evaluated against the same anomaly score thresholds as the first anomaly score (e.g., discussed in context of method 400) to achieve true scalability and consistency.

In accordance with a determination that the second anomaly score is indicative of a potential fault of the second asset at decision point 1006, the method 1000 proceeds to block 1008, at which fault data indicative of the potential fault of the second asset is generated. Block 1010 then involves causing presentation via the user interface of the fault data and an indication of the one or more features considered in the determination of the second anomaly score. Thus, the user is made aware of the potential fault of the second asset via the user interface and can reach a deeper contextual understanding of the potential fault via the indication of the one or more features.

As such, by employing one or more techniques disclosed herein, asset anomalies are accurately detected and predicted. That is, the present disclosure enables improvements to asset anomaly detection/prediction accuracy. Comprehensive and complete information including fault data and an indication of the one or more features considered in the identification of a potential fault are provided to prompt user interaction and enable a user to reach a detailed understanding of the potential fault. Further configuration and training of models (e.g., machine learning models) used to detect and predict asset anomalies is also enabled in various embodiments, to further improve efficiency and accuracy of such models generally the detection and prediction of asset anomalies. Through various embodiments of the present disclosure, asset anomaly detection and prediction is advantageously scalable with extended functionality by using generated features to identify potential faults in other assets and applying such generated features to anomaly detection/prediction for multiple assets. In some examples, such scalability improves anomaly detection and prediction in newly added assets, to include assets whose functionality and/or specifications are unknown.

In some example embodiments, certain ones of the operations herein can be modified or further amplified as described below. Moreover, in some embodiments additional optional operations can also be included. It should be appreciated that each of the modifications, optional additions or amplifications described herein can be included with the operations herein either alone or in combination with any others among the features described herein.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments can be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

It is to be appreciated that 'one or more' includes a function being performed by one element, a function being performed by more than one element, e.g., in a distributed fashion, several functions being performed by one element, several functions being performed by several elements, or any combination of the above.

Moreover, it will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

The hardware used to implement the various illustrative logics, logical blocks, modules, and circuits described in connection with the aspects disclosed herein can include a general purpose processor, a digital signal processor (DSP), a special-purpose processor such as an application specific integrated circuit (ASIC) or a field programmable gate array (FPGA), a programmable logic device, discrete gate or transistor logic, discrete hardware components, or any combination thereof designed to perform the functions described herein. A general-purpose processor can be a microprocessor, but, in the alternative, the processor can be any processor, controller, microcontroller, or state machine. A processor can also be implemented as a combination of computing devices, e.g., a combination of a DSP and a microprocessor, a plurality of microprocessors, one or more microprocessors in conjunction with a DSP core, or any other such configuration. Alternatively, or in addition, some steps or methods can be performed by circuitry that is specific to a given function.

In one or more example embodiments, the functions described herein can be implemented by special-purpose hardware or a combination of hardware programmed by firmware or other software. In implementations relying on firmware or other software, the functions can be performed as a result of execution of one or more instructions stored on one or more non-transitory computer-readable media and/or one or more non-transitory processor-readable media. These instructions can be embodied by one or more processor-executable software modules that reside on the one or more non-transitory computer-readable or processor-readable storage media. Non-transitory computer-readable or processor-readable storage media can in this regard comprise any storage media that can be accessed by a computer or a processor. By way of example but not limitation, such non-transitory computer-readable or processor-readable media can include random access memory (RAM), read-only memory (ROM), electrically erasable programmable read-only memory (EEPROM), FLASH memory, disk storage, magnetic storage devices, or the like. Disk storage, as used herein, includes compact disc (CD), laser disc, optical disc, digital versatile disc (DVD), floppy disk, and Blu-ray disc^{™}, or other storage devices that store data magnetically or optically with lasers. Combinations of the above types of media are also included within the scope of the terms non-transitory computer-readable and processor-readable media. Additionally, any combination of instructions stored on the one or more non-transitory processor-readable or computer-readable media can be referred to herein as a computer program product.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components can be used in conjunction with the supply management system. Therefore, it is to be understood that the inventions are not to be limited to the specific embodiments disclosed and that modifications and other embodiments are intended to be included within the scope of the appended claims. Moreover, the steps in the method described above can not necessarily occur in the order depicted in the accompanying diagrams, and in some cases one or more of the steps depicted can occur substantially simultaneously, or additional steps can be involved. Although specific terms are employed herein, they are used in a generic and descriptive sense only and not for purposes of limitation.

It is intended that the specification and examples be considered as exemplary only, with a true scope and spirit of the disclosure being indicated by the following claims.

## Claims

1. A system, comprising:
a processor; and
a memory that stores executable instructions that, when executed by the processor, cause the processor to:
generate, via input to a user interface, one or more features based at least on sensor data collected from a plurality of sensors associated with an asset;
receive a data stream comprising data associated with the asset;
determine an anomaly score for the data stream based at least on the one or more features; and
in accordance with a determination that the anomaly score is indicative of a potential fault of the asset:
generate fault data indicative of the potential fault; and
cause presentation of the fault data and an indication of the one or more features considered in the determination of the anomaly score via the user interface.

2. The system of claim 1, the executable instructions, when executed by the processor, further causing the processor to:
receive a second data stream associated with a second asset; and
determine a second anomaly score for the second data stream based at least on the one or more features generated based at least on the sensor data collected from the plurality of sensors associated with the asset.

3. The system of claim 2, the executable instructions, when executed by the processor, further causing the processor to, in accordance with a determination that the second anomaly score is indicative of a potential fault of the second asset:
generate fault data indicative of the potential fault of the second asset; and
cause presentation of the fault data and an indication of the one or more features considered in the determination of the second anomaly score via the user interface.

4. The system of any of claims 1-3, the anomaly score being determined by processing the data stream in accordance with a trained model.

5. The system of claim 4, the trained model trained based at least on a combination of historical data associated with the asset and the one or more features.

6. The system of claim 4, the trained model comprising one of an advanced pattern recognition model, a moving-mean principal component analysis (MMPCA) model, or an autoencoder model.

7. The system of claim 4, the executable instructions, when executed by the processor, further causing the processor to:
evaluate prediction accuracy of the trained model; and
in accordance with a determination that a prediction accuracy requirement for the trained model is satisfied:
cause presentation of an indication of the determination that the prediction accuracy requirement for the trained model is satisfied via the user interface;
in response to the presentation, receive, via the user interface, a modification of at least one feature of the one or more features; and
retrain the trained model based at least on the modification of the at least one feature of the one or more features.

8. The system of any of claims 1-7, the executable instructions, when executed by the processor, further causing the processor to:
provide an output via the user interface of an indication of one or more generated features; and
receive, via the user interface, a modification of the one or more generated features.

9. A method comprising:
generating, via input to a user interface, one or more features based at least on sensor data collected from a plurality of sensors associated with an asset;
receiving a data stream comprising data associated with the asset;
determining an anomaly score for the data stream based at least on the one or more features; and
in accordance with a determination that the anomaly score is indicative of a potential fault of the asset:
generating fault data indicative of the potential fault; and
causing presentation of the fault data and an indication of the one or more features considered in the determination of the anomaly score via the user interface.

10. The method of claim 9, further comprising:
receiving a second data stream associated with a second asset; and
determining a second anomaly score for the second data stream based at least on the one or more features generated based at least on the sensor data collected from the plurality of sensors associated with the asset.

11. The method of claim 10, further comprising, in accordance with a determination that the second anomaly score is indicative of a potential fault of the second asset:
generating fault data indicative of the potential fault of the second asset; and
causing presentation of the fault data and an indication of the one or more features considered in the determination of the anomaly score via the user interface.

12. The method of any of claims 9-11, the anomaly score being determined by processing the data stream in accordance with a trained model.

13. The method of claim 12, the trained model trained based at least on a combination of historical data associated with the asset and the one or more features.

14. The method of claim 12, the trained model comprising one of an advanced pattern recognition model, a moving-mean principal component analysis (MMPCA) model, or an autoencoder model.

15. The method of claim 12, further comprising:
evaluating prediction accuracy of the trained model; and
in accordance with a determination that a prediction accuracy requirement for the trained model is satisfied:
causing presentation of an indication of the determination that the prediction accuracy requirement for the trained model is satisfied via the user interface;
in response to the presentation, receiving, via the user interface, a modification of at least one feature of the one or more features; and
retraining the trained model based on the modification of the at least one feature of the one or more features.
